# EUROPEAN PATENT APPLICATION

(11) **EP 4 209 443 A1**
(43) Date of publication of application: **12.07.2023**
(21) Application number: 22162351.5
(22) Date of filing: 15.03.2022
(51) Int. Cl.: B66B 29/00

(54) **ESCALATOR EQUIPMENT ALERT METHOD AND ESCALATOR EQUIPMENT ALERT SYSTEM**

(30) Priority: 07.01.2022 TW 111100831
(71) Applicant: Acer Incorporated, New Taipei City 221 (TW)
(72) Inventor: Han, Meng-Ting, 221 New Taipei City (TW); Chen, Tsung-Yao, 221 New Taipei City (TW); Ho, Andy, 221 New Taipei City (TW)
(74) Representative: 2K Patentanwälte Blasberg Kewitz & Reichel

(57) **Abstract**

An escalator equipment alert method and an escalator equipment alert system (10) are disclosed. The method includes: activating a camera (11, 11(1), 11(2)) disposed on an entrance of an escalator equipment (21); capturing a foot image (31) of a passenger (301) about to board the escalator equipment (21) through the camera (11, 11(1), 11(2)); performing an image analyzation on the foot image (31) to detect a danger boarding behavior related to the passenger (301); and in response to the danger boarding behavior, issuing an alert message matched with the danger boarding behavior through an alert device (12).

## Description

### BACKGROUND

### Technical Field

The disclosure relates to an escalator alert technology, and in particular, to an escalator equipment alert method and an escalator equipment alert system.

### Description of Related Art

Most shopping malls or stores are equipped with escalators for customers to move between floors. However, when a customer boards an escalator with soft rubber shoes (such as Crocs), accidents frequently occur. For instance, it is easy form them to have their feet caught in the carrier of the operating escalator and cause foot injuries, or fall on the escalator when they (e.g. children) board in the wrong way (e.g. standing in reverse direction).

### SUMMARY

In view of this, the disclosure provides an escalator equipment alert method and an escalator equipment alert system, which can effectively improve the safety of people when boarding escalator equipment.

The embodiments of the disclosure provides an escalator equipment alert method, which includes: activating a camera disposed on an entrance of an escalator equipment; capturing a foot image of a passenger about to board the escalator equipment through the camera; performing an image analyzation on the foot image to detect a danger boarding behavior related to the passenger; and, in response to the danger boarding behavior, issuing an alert message matched with the danger boarding behavior through an alert device.

The embodiments of the disclosure further provides an escalator equipment alert system, which includes a camera, an alert device, and a processor. The camera is disposed on an entrance of an escalator equipment. The processor is coupled to the camera and the alert device. The processor is configured to: activate the camera; capture a foot image of a passenger about to board the escalator equipment through the camera; perform an image analyzation on the foot image to detect a danger boarding behavior related to the passenger; and, in response to the danger boarding behavior, issue an alert message matched with the danger boarding behavior through the alert device.

Based on the above, the escalator equipment alert method and escalator equipment alert system provided by the disclosure focuses on analyzing the foot image of a user (i.e. passenger) of the escalator, and issues a corresponding alert message when a possible danger boarding behavior is detected. Thereby, the safety of people when boarding the escalator equipment can be effectively improved.

### BRIEF DESCRIPTION OF THE DRAWINGS

The accompanying drawings are included to provide a further understanding of the disclosure, and are incorporated in and constitute a part of this specification. The drawings illustrate embodiments of the disclosure and, together with the description, serve to explain the principles of the disclosure.
Figure 1 is a schematic diagram of an escalator equipment alert system according to an embodiment of the disclosure.
Figure 2 is a schematic appearance diagram of an escalator equipment according to an embodiment of the disclosure.
Figure 3 is a schematic diagram of a foot image of a passenger according to an embodiment of the disclosure.
Figure 4 is a flowchart of an escalator equipment alert method according to an embodiment of the disclosure.

### DESCRIPTION OF THE EMBODIMENTS

Reference will now be made in detail to the exemplary embodiments of the disclosure, examples of which are illustrated in the accompanying drawings. Wherever possible, the same reference numbers are used in the drawings and the description to refer to the same or like parts.

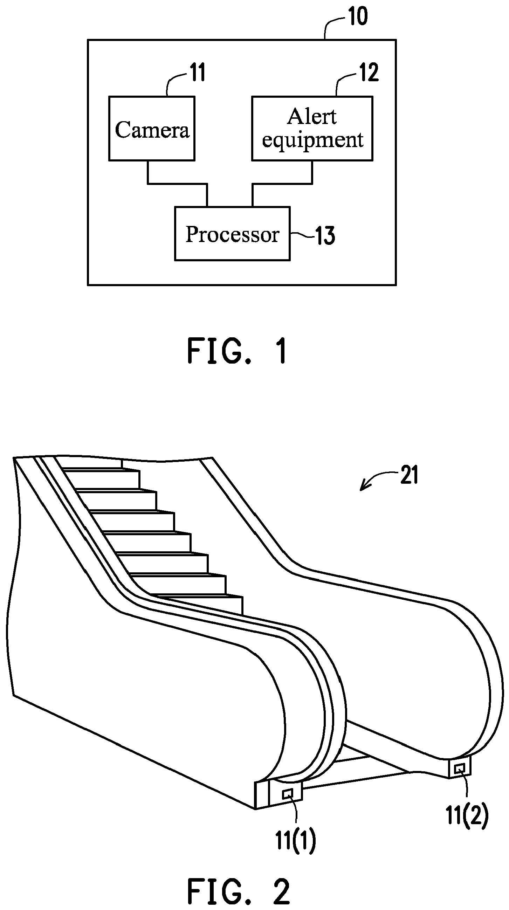

Figure 1 is a schematic diagram of an escalator equipment alert system according to an embodiment of the disclosure. Referring to Figure 1, an escalator equipment alert system 10 includes a camera 11, an alert device 12, and a processor 13. The camera 11 may be configured to capture an image. For example, the camera 11 may include a lens and a photosensitive element. The lens and the photosensitive element may cooperate to capture the image. Moreover, the camera 11 may include various optical sensors such as visible light sensors and/or infrared light sensors, and the total number of cameras 11 may be one or more, and the disclosure is not limited thereto.

The alert device 12 may be configured to issue an alert message. For example, the alert device 12 may include at least one of an audio alert device and a visual alert device. The audio alert device may issue the alert message in the form of sound. For example, the audio alert device may include a speaker to issue an alert sound as a waring or reminder. The visual alert device may issue the alert message in a visual form. For example, the visual alert device may include a display and/or an indicator light to issue an alert image and/or an alert light signal as a warning or reminder.

The processor 13 is coupled to the camera 11 and the alert device 12. The processor 13 may be used for the whole or part of the operation of the escalator equipment alert system 10. For example, the processor 13 may include a central processing unit (CPU), a graphics processing unit (GPU), or other programmable general-purpose or special-purpose microprocessors, digital signal processors (DSP), programmable controllers, application specific integrated circuits (ASIC), programmable logic devices (PLD), or other similar devices or combinations of these devices.

Further, the escalator equipment alert system 10 may further include a storage circuit, a power supply circuit, and various input/issue (I/O) interfaces. The storage circuit may be configured to store data (e.g. code). The power supply circuit may be configured to provide the power required for the operation of the escalator equipment alert system 10. Various input/issue (I/O) interfaces may be configured to transmit signals.

Figure 2 is a schematic appearance diagram of an escalator equipment according to an embodiment of the disclosure. Referring to Figure 1 and Figure 2, the camera 11 may include at least one of a camera 11(1) and a camera 11(2). The camera 11(1) and the camera 11(2) may be disposed on an entrance of an escalator equipment 21. For example, the camera 11(1) and the camera 11(2) may be embedded in the escalator equipment 21 and disposed under the handrail device at the entrance of the escalator equipment 21 or similar positions, as shown in Figure 2. In particular, in this embodiment, it is assumed that the stepped transport mechanism in the escalator equipment 21 for pedestrians (i.e. passengers) to stand or step on is moving (or rolling) obliquely upward to take the passengers upstairs.

The processor 13 may be configured to activate the camera 11(1) and/or the camera 11(2). After activating the camera 11(1) and/or the camera 11(2), the processor 13 may capture the foot image of the passenger at the entrance of the escalator equipment 21 and about to board the escalator equipment 21 through the camera 11(1) and/or the camera 11(2). The foot image may at least represent the foot image of one or more passengers. For example, the foot may include or specifically refer to a position between the lower leg and the sole of the passenger.

It should be noted that the camera 11(1) and the camera 11(2) in Figure 2 may be disposed on the entrance of the escalator equipment 21 at the same time or alternatively. Moreover, the actual disposition position of the camera 11(1) and the camera 11(2) on the escalator equipment 21 may be adjusted according to practical needs, as long as they may be configured to capture the foot image of the passenger. Alternatively, more cameras may also be disposed on the entrance of the escalator equipment 21 (e.g. near the camera 11(1) and/or the camera 11(2)) to provide more angle-focusing foot images of the passenger. Further, in one embodiment, the camera 11(1), the camera 11(2), and/or other cameras may also be disposed under the handrail device inside the escalator equipment 21 to capture foot images of the passenger boarding the escalator equipment 21.

After obtaining the foot image, the processor 13 may be configured to perform an image analyzation on the foot image to detect a danger boarding behavior related to the passenger. For example, the processor 13 may perform the image analyzation (e.g. object recognition) on the foot image using an image recognition model such as a trained neural(-like) network model or a deep learning model and detect the danger boarding behavior according to the analyzation result. After detecting the danger boarding behavior, in response to the danger boarding behavior, the processor 13 may issue an alert message matched with the danger boarding behavior through the alert device 12.

In one embodiment, the danger boarding behavior may include at least one of a first danger boarding behavior, a second danger boarding behavior, and a third danger boarding behavior. The first danger boarding behavior is related to the type of shoes worn by the passenger. The second danger boarding behavior is related to the orientation of the passenger's feet (e.g. toes). The third danger boarding behavior is related to the number of passengers (e.g. the total number of people). Further, more danger boarding behaviors may also be defined according to practical needs, and the disclosure is not limited thereto.

In one embodiment, the processor 13 may detect the type of shoes worn by the passenger according to the result of the image analyzation. In response to a particular type of shoes worn by a passenger, the processor 13 may determine that a first danger boarding behavior occurs. Then, the alert device 12 may issue an alert message (also referred to as a first alert message) matched with the first danger boarding behavior. For example, common shoes that are more dangerous for escalators include shoes with toes and/or uncovered toes (e.g. slippers or sandals) and soft rubber shoes (e.g. Crocs), and the disclosure is not limited thereto.

In one embodiment, when it is detected that the type of shoes worn by the passenger belongs to one of the more dangerous shoes for escalators (that is, the passenger wears a specific type of shoes), the processor 13 may determine that the first danger boarding behavior occurs and instruct the alert device 12 to issue the first alert message. For example, the first alert message may be used to remind passengers who are currently boarding or about to board the escalator equipment 21 that the shoes they are wearing are dangerous when boarding the escalator equipment 21, and that they need to pay more attention and prevent the soles of their shoes from being caught by the equipment.

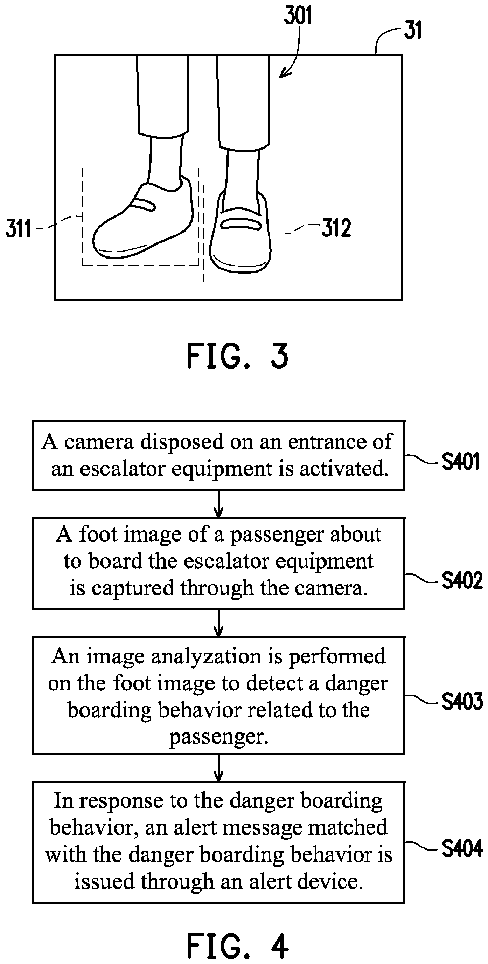

Figure 3 is a schematic diagram of a foot image of a passenger according to an embodiment of the disclosure. Referring to Figure 3, in one embodiment, the processor 13 may perform the image analyzation (e.g. object recognition) on a foot image 31. According to the result of the image analyzation, the processor 13 may detect the type of shoes worn by a passenger 301. For example, in the process of image analyzation, the processor 13 may identify the image content related to shoes in the foot image 31 and select the same. For example, the processor 13 may use a predictive frame 311 and a predictive frame 312 to select the image content related to shoes in the foot image 31. The processor 13 may identify the type of shoes worn by the passenger 301 according to the image content in the predictive frame 311 and the predictive frame 312.

In case of soft rubber shoes, a common soft rubber shoe is characterized by non-covering of the heel, wider width at the front quarter of the shoe than at the halfway of the shoe, and the tip not right in the middle of the toe cap. The processor 13 may identify the type of shoes worn by the passenger 301 in the foot image 31 according to these characteristics. For example, the processor 13 may train an image recognition model according to such characteristics. Alternatively, the processor 13 may use a plurality of training images representing images of soft rubber shoes to train the image recognition model. The trained image recognition model may then have the ability to detect soft rubber shoes in the foot image 31. In addition, different types of shoes may have different characteristics. The processor 13 may train the image recognition model according to the characteristics or training images of different types of shoes, such that the trained image recognition model has the ability to identify shoes (i.e. to detect a specific type of shoes).

In one embodiment, the processor 13 may detect the orientation of the passenger's feet according to the result of the image analyzation. In response to the passenger's feet facing a specific direction, the processor 13 may determine that the second danger boarding behavior occurs. Then, the alert device 12 may issue an alert message (also referred to as a second alert message) matched with the second danger boarding behavior. For example, a common danger escalator boarding behavior includes passengers deliberately boarding the escalator in the reverse direction. For example, when boarding an escalator, some passengers may deliberately stand with their toes in the reverse direction to the moving direction of the escalator, causing themselves to fall for not being able to know when to exit the escalator.

In one embodiment, when it is detected that the passenger deliberately stands with the toes in the reverse direction to the moving direction of the escalator (that is, the passenger's feet are facing a specific direction), the processor 13 may determine that the second danger boarding behavior occurs and instruct the alert device 12 to issue the second alert message. For example, the second alert message may be used to remind the passengers who are currently boarding or about to board the escalator equipment 21 do board the escalator equipment 21 with their front facing the moving direction of the escalator so as to avoid danger.

Taking Figure 3 as an example, the processor 13 may detect the orientation of the toes of the passenger 301 in the foot image 31. If the toes of the passenger 301 are facing a preset direction (i.e. the passenger's feet are facing a specific direction), the processor 13 may determine that the second danger boarding behavior occurs and instruct the alert device 12 to issue the second alert message.

In one embodiment, the processor 13 may detect a passenger density according to the result of the image analyzation. In response to the passenger density reaching a critical value, the processor 13 may determine that the third danger boarding behavior occurs. Then, the alert device 12 may issue an alert message (also referred to as a third alert message) matched with the third danger boarding behavior. For example, common time points that are prone to escalator accidents include when the passenger density is too high. For example, when there are too many passengers on the escalator at a certain time (or within a certain time range), it is easy for the passengers to push each other or collide and cause accidents, and even mechanical damage or life reduction may occur due to excessive passengers boarding in a short period of time.

In one embodiment, when it is detected that the passenger density is too high (i.e. the passenger density reaches a critical value), the processor 13 may determine that the third danger boarding behavior occurs and instruct the alert device 12 to issue the third alert message. For example, the third alert message may be used to remind the passengers who are about to board the escalator equipment 21 to suspend boarding the escalator equipment 21, increase the distance from other people boarding taking the escalator equipment 21, or board other nearby escalators so as to avoid danger or mechanical damage caused by crowds.

Taking Figure 3 as an example, the processor 13 may detect the total number of the predictive frames 311 and the predictive frames 312 corresponding to all passengers in the foot image 31, and/or the proportion of the image range covered by the predictive frames 311 and the predictive frames 312 in the entire foot image 31 (or the ground area in the foot image 31). If the total number of the predictive frames 311 and the predictive frames 312 is higher than the preset number or the proportion of the image range covered by the predictive frames 311 and the predictive frames 312 in the entire foot image 31 (or the ground area in the foot image 31) is higher than the preset value, it means that there are too many passengers currently intending to board the escalator (that is, the passenger density reaches a critical value). At this time, the processor 13 may determine that the third danger boarding behavior occurs and instruct the alert device 12 to issue the third alert message.

It should be noted that the foregoing embodiments only provide several danger boarding behaviors as examples to be defined and detected by analyzing foot images. In other embodiments, more danger boarding behaviors may be defined and detected, and more types of alert messages may be correspondingly issued, and the disclosure is not limited thereto.

In one embodiment, the alert device 12 may be integrated (e.g. embedded) in the escalator equipment 21 or independent of the escalator equipment 21. For example, the alert device 12 may be disposed on the ground at the entrance of the escalator equipment 21, on the handrail devices on both sides of the escalator equipment 21, and/or on the surface of the stepped transportation mechanism, and the like. The disclosure does not limit the actual disposition position of the alert device 12.

In one embodiment, the processor 13 may further deliver customized advertisement content according to the type of shoes worn by the passenger. For example, the processor 13 may deliver the customized advertisement content through an advertising device on or near the escalator equipment 21 according to the type of shoes worn by the passenger detected in one or more foot images. For example, when it is detected that more than a preset proportion (e.g. 50%, 60% or 70%) of the passengers boarding the escalator equipment 21 in a certain time range are wearing high heels, the processor 13 may send the customized advertisement content related to high heels to the advertising devices such as displays and/or speakers near the exit of the escalator equipment 21 (or at the place where the escalator equipment 21 is located) to play the advertisement content. Alternatively, when it is detected that more than the preset proportion of the passengers who board the escalator equipment 21 within a certain time range are wearing sports shoes, the processor 13 may instead deliver advertisement content related to sporting goods, and so on.

In one embodiment, the processor 13 may further provide at least one of equipment maintenance information and manpower scheduling information according to the detected passenger density. The equipment maintenance information may include an equipment maintenance suggestion related to the escalator equipment 21. The manpower scheduling information includes a manpower scheduling suggestion related to the location where the escalator equipment 21 is located. For example, the processor 13 may automatically generate the equipment maintenance information and/or the manpower scheduling information according to the distribution of passenger density within a specific time range. For example, the equipment maintenance information may provide appropriate adjustment suggestions for the maintenance regulations of the escalator equipment 21 (e.g. equipment is maintained at a frequency of every n days) in response to changes in passenger density and/or statistical results within a specific time range. For example, the manpower scheduling information may provide suitable adjustment suggestions for the manpower resources of the place where the escalator equipment 21 is located (for example, to provide additional manpower to guide passengers during the peak traffic period of the escalator equipment 21) in response to correspond to changes in passenger density and/or statistical results within a specific time range. Moreover, the equipment maintenance information and/or the manpower scheduling information may be sent to the back-end management platform or server for storage and for the management personnel as a reference for field management.

In one embodiment, the detected information on the type of shoes worn by the passengers and/or the passenger density may also be stored in the back-end management platform or server, and may be used by managers or advertisers as a reference for advertising. For example, if there are many passengers wearing high heels on the escalator equipment 21 during a certain period of the week, the advertiser may consider running a large number of advertisements related to high heels in the place where the escalator equipment 21 is located during this period so to improve the advertising efficiency. Moreover, managers may also adjust the cost of running specific advertisements in specific time periods based on such information.

It should be noted that the above-mentioned embodiments only provide several examples of applying the analyzation result of the foot image (e.g. the type of shoes worn by passengers and/or information of passenger density) to advertisement placement and/or field management. In other embodiments, the analyzation result of the foot image may be more widely applied to other field management mechanisms (e.g. adjusting the admission fee of the field according to the trough period and peak period of the traffic of the escalator equipment 21, etc.), and the disclosure is not limited thereto.

Figure 4 is a flowchart of an escalator equipment alert method according to an embodiment of the disclosure. Referring to Figure 4, in step S401, a camera disposed on an entrance of an escalator equipment is activated. In step S402, a foot image of a passenger about to board escalator equipment is captured through the camera. In step S403, an image analyzation is performed on the foot image to detect a danger boarding behavior related to the passenger. In step S404, in response to the danger boarding behavior, an alert message matched with the danger boarding behavior is issued through the alert device.

Each step in Figure 4 has been described in detail as above, and will therefore not be repeated herein. It should be noted that each step in Figure 4 may be implemented as a plurality of codes or circuits, and the disclosure is not limited thereto. Moreover, the method of Figure 4 may be used in conjunction with the above embodiments, and may also be used alone, which is not limited in the disclosure.

In summary, compared with the traditional escalator equipment that may only play standardized broadcasting messages with public broadcasting equipment at the venue or with its own broadcasting equipment, the escalator alert method and the escalator equipment alert system provided by the embodiments of the disclosure may study and determine possible danger boarding behaviors and provide matched alert messages according to the foot images of the passengers captured in focus. In this manner, the safety of people when boarding the escalator equipment can be effectively improved.

## Claims

1. An escalator equipment alert method, comprising:
activating a camera (11, 11(1), 11(2)) disposed on an entrance of an escalator equipment (21);
capturing a foot image (31) of a passenger (301) about to board the escalator equipment (21) through the camera (11, 11(1), 11(2));
performing an image analyzation on the foot image (31) to detect a danger boarding behavior related to the passenger (301); and
in response to the danger boarding behavior, issuing an alert message matched with the danger boarding behavior through an alert device (12).

2. The escalator equipment alert method according to claim 1, wherein the camera (11, 11(1), 11(2)) is embedded in the escalator equipment (21).

3. The escalator equipment alert method according to claim 1 or 2, wherein the danger boarding behavior comprises at least one of a first danger boarding behavior, a second danger boarding behavior, and a third danger boarding behavior,
the first danger boarding behavior is related to a type of shoes worn by the passenger (301),
the second danger boarding behavior is related to an orientation of passenger's feet, and
the third danger boarding behavior is related to a number of passengers (301).

4. The escalator equipment alert method according to claim 3, wherein performing the image analyzation on the foot image (31) to detect the danger boarding behavior related to the passenger (301) comprises:
detecting the type of shoes worn by the passenger (301) according to a result of the image analyzation; and
in response to the passenger (301) wearing a particular type of shoes, determining that the first danger boarding behavior occurs.

5. The escalator equipment alert method according to claim 3 or 4, wherein performing the image analyzation on the foot image (31) to detect the danger boarding behavior related to the passenger (301) comprises:
detecting the orientation of the passenger's feet according to a result of the image analyzation; and
in response to the feet of the passenger (301) facing a specific direction, determining that the second danger boarding behavior occurs.

6. The escalator equipment alert method according to any of the claims 3 to 5, wherein performing the image analyzation on the foot image (31) to detect the danger boarding behavior related to the passenger (301) comprises:
detecting a passenger density according to a result of the image analyzation; and
in response to the passenger density reaching a critical value, determining that the third danger boarding behavior occurs.

7. The escalator equipment alert method according to any of the claim 4 to 6, further comprising:
delivering customized advertisement content according to the type of shoes worn by the passenger (301).

8. An escalator equipment alert system (10), comprising:
a camera (11, 11(1), 11(2)), disposed on an entrance of an escalator equipment (21); an alert device (12); and
a processor (13), coupled to the camera (11, 11(1), 11(2)) and the alert device (12),
wherein the processor (13) is configured to:
activate the camera (11, 11(1), 11(2));
capture a foot image (31) of a passenger (301) about to board the escalator equipment (21) through the camera (11, 11(1), 11(2));
perform an image analyzation on the foot image (31) to detect a danger boarding behavior related to the passenger (301); and
in response to the danger boarding behavior, issue an alert message matched with the danger boarding behavior through the alert device (12).

9. The escalator equipment alert system (10) according to claim 8, wherein the camera (11, 11(1), 11(2)) is embedded in the escalator equipment (21).

10. The escalator equipment alert system (10) according to claim 8 or 9 , wherein the danger boarding behavior comprises at least one of a first danger boarding behavior, a second danger boarding behavior, and a third danger boarding behavior,
the first danger boarding behavior is related to a type of shoes worn by the passenger (301),
the second danger boarding behavior is related to an orientation of passenger's feet, and
the third danger boarding behavior is related to a number of passengers (301).

11. The escalator equipment alert system (10) according to claim 10, wherein the performing the image analyzation on the foot image (31) to detect the danger boarding behavior related to the passenger (301) comprises:
detecting the type of shoes worn by the passenger (301) according to a result of the image analyzation; and
in response to the passenger (301) wearing a particular type of shoes, determining that the first danger boarding behavior occurs.

12. The escalator equipment alert system (10) according to claim 10 to 11, wherein performing the image analyzation on the foot image (31) to detect the danger boarding behavior related to the passenger (301) comprises:
detecting the orientation of the passenger's feet according to a result of the image analyzation; and
in response to the passenger's feet facing a specific direction, determining that the second danger boarding behavior occurs.

13. The escalator equipment alert system (10) according to any of the claims 10 to 12, wherein the performing the image analyzation on the foot image (31) to detect the danger boarding behavior related to the passenger (301) comprises:
detecting a passenger density according to a result of the image analyzation; and
in response to the passenger density reaching a critical value, determining that the third danger boarding behavior occurs.

14. The escalator equipment alert system (10) according to any of the claims 11 to 13, wherein the processor (13) is further configured to:
deliver customized advertisement content according to the type of shoes worn by the passenger (301).
